**Europäisches Patentamt**

**European Patent Office**

**Office européen des brevets**

(11) Veröffentlichungsnummer : **0 062 835 B1**

(12) **EUROPÄISCHE PATENTSCHRIFT**

(45) Veröffentlichungstag der Patentschrift :
07.08.85

(21) Anmeldenummer : 82102693.7

(22) Anmeldetag : 31.03.82

(51) Int. Cl.⁴ : **C 08 J 9/34, C 08 J 9/02, F 16 F 1/37, C 08 G 18/76**

(54) **Verfahren zur Herstellung von geschlossenzelligen Polyurethan-Formteilen mit einer verdichteten Randzone.**

(30) Priorität : 04.04.81 DE 3113690

(43) Veröffentlichungstag der Anmeldung :
20.10.82 Patentblatt 82/42

(45) Bekanntmachung des Hinweises auf die Patenterteilung : 07.08.85 Patentblatt 85/32

(84) Benannte Vertragsstaaten :
DE FR GB IT NL SE

(56) Entgegenhaltungen :
EP-A- 0 023 646
FR-A- 1 388 551
FR-A- 1 599 325
FR-A- 2 031 632
GB-A- 1 120 425
US-A- 3 042 631

(73) Patentinhaber : Elastogran GmbH
Postfach 1140
D-2844 Lemförde (DE)

(72) Erfinder : Zipp, Otmar, Dr.
Zum Rott 21
D-4500 Osnabrueck (DE)
Erfinder : Bollmann, Heinz
Ot Heeke
D-4552 Alfhausen (DE)
Erfinder : Stutz, Herbert, Dr.
Schneidemuehler Strasse 9C
D-7500 Karlsruhe (DE)
Erfinder : Scholz, Wolfgang
Gartenstrasse 318
D-2844 Lemfoerde (DE)

(74) Vertreter : Schweiss, Werner, Dr. et al
Carl-Bosch-Strasse 38
D-6700 Ludwigshafen (DE)

# 0 062 835

**Beschreibung**

Thermoplastisch verarbeitbare Polyurethan-Elastomere auf Basis von überwiegend linearen Polyester-polyolen aus aliphatischen Dicarbonsäuren und Alkylenglykolen, Hydroxycarbonsäuren oder von Polyether-polyolen auf Basis von Polytetrahydrofuran sind bekannt. Übersichtlich werden diese Polyurethan-Elastomeren z. B. beschrieben in « Urethanes in Elastomers and Coatings » Technomic Publishing Company 265 W. State St., West Port, Connecticut/USA 1973, Seiten 201 bis 230 oder im Kunststoff-Handbuch, Band VII, Polyurethane von R. Vieweg und A. Höchtlen, Carl Hanser-Verlag, München 1966, Seiten 206 ff.

Bekannt ist außerdem die Herstellung von Polyurethanschaumstoffen mit einer dichten, porenfreien Außenhaut und einem Schaumstoffkern, sogenannten Integralschaumstoffen. Die Grundlagen, Verarbeitung und Anwendung derartiger Schaumstoffe wird beispielsweise beschrieben in der Monographie « Integralschaumstoffe » von H. Peichota und H. Röhr, Carl Hanser Verlag, München, Wien, 1975.

Nach Angaben der DE-AS 16 94 138 werden harte Polyurethan-Integralschaumstoffe hergestellt durch Umsetzung von organischen Polyisocyanaten und Verbindungen mit mehreren reaktionsfähigen Wasserstoffatomen in Gegenwart von maximal 0,2 Mol, bezogen auf 100 g der Wasserstoffatome enthaltenden Verbindungen, eines niedrigsiedenden Lösungsmittels als Treibmittel, wobei das Verfahren dadurch charackerisiert wird, daß die Summe aus der Dichte des im unverdichteten Zustands resultierenden Schaumstoffes und Verdichtungsgrades 1,45 bis 8,15 ist, das entsprechende Produkt aus Dichte und Verdichtungsgrad zwischen 0,2 und 1,2 liegt und das schaumfähige Reaktionsgemisch in eine Form gefüllt wird, deren Oberflächentemperatur mindestens 60 °C unterhalb der maximalen Reaktionstemperatur liegt.

Eine Zusammenfassung über flexible Integralschaumstoffe wurde ferner veröffentlicht in « Advances in Urethan Science and Technology » Volume 2, 1973, Seiten 203 ff. (Technomic Publication, Technomic Publishing Co., 265 W State St., Westport Conn. 06880).

In Rubber Age, Mai 1966 (Seiten 76 bis 80) wird eine Methode zur Herstellung von mikrozellularen Polyurethan-Kautschuken aus NCO-gruppenhaltigen Prepolymeren auf Basis von Toluylendiisocyanat und Polytetramethylenetherglykol und Diaminen als Kettenverlängerungsmittel beschrieben.

Bei den genannten Verfahren wird als Treibmittel stets ein inertes, niedrigsiedendes organisches Lösungsmitel verwendet, da nur auf diese Weise eine dichte Außenhaut erzielt wird. Als Kettenverlängerungsmittel kommen hingegen Diole und Diamine zur Anwendung.

Zur Herstellung von zelligen Elastomeren werden als Treibmittel Kohlendioxid, das bei der Reaktion von Diisocyanat mit Wasser entsteht, Stickstoff aus thermisch labilen Stickstoffverbindungen und Lösungsmittel verwendet. (Kunstoff-Handbuch, Band VII, Polyurethane von R. Vieweg und A. Höchtlen, Seiten 276 ff.) Nachteil hierbei ist, daß die Kohlendioxid getriebenen zelligen Elastomere praktisch nur offenporig sind. Soweit geschlossenporige Produkte entstehen, deren Zellen Kohlendioxid enthalten, schrumpfen diese schon während der Herstellung stark zusammen. Ferner platzen die Zellen unter dynamischer Beanspruchung auf, so daß die Elastomeren Wasser aufnehmen können.

Polyurethan-Schaumstoff-Formkörper mit einer nichtzelligen Oberflächenschicht werden gemäß GB-A-1 120 425 nach dem one shot-Verfahren durch Umsetzung von Polyolen, mindestens einer polyfunktionellen Verbindung mit mindestens einer primären Aminogruppe, Polyisocyanaten und/oder NCO-Gruppen enthaltenden Prepolymeren und Treibmitteln, wie z. B. Wasser, niedrigsiedenden Lösungsmitteln oder Gase abspaltenden Verbindungen in einem bis zu 100 °C erwärmten, offenen oder geschlossenen Formwerkzeug hergestellt. Durch die Verwendung von hochreaktiven Aminoverbindungen als Aufbaukomponente wird nach diesem Verfahren eine rasche Polyharnstoffbildung, verbunden mit einem schnellen Viskositätsanstieg an der Formwandinnenfläche erzielt und dadurch ein Austreten von Treibgas verhindert.

Hochdichte Polyurethan-Schaumstoffe werden nach Angaben der FR-A-1 388 551 erhalten durch Einbringen einer größeren Menge eines schaumfähigen Reaktionsgemisches in ein Formwerkzeug als zu dessen Ausschäumung erforderlich ist und Entweichenlassen der überschüssigen Treibgasmenge. Zur Herstellung der zelligen Produkte können beliebige Aufbaukomponenten und Treibmittel verwendet werden, die gemäß den Beispielen nach dem one shot-Verfahren zur Reaktion gebracht werden.

Die Aufgabe der vorliegenden Erfindung bestand darin, geschlossenzellige Polyurethan-Formteile, die insbesondere als dynamisch belastbare Federelemente verwendet werden können, herzustellen. Die Formteile sollten außerdem eine verdichtete Randzone besitzen. Ferner sollten die Formteile auch nach zahlreichen Lastwechseln, d. h. bei mehr als 100 000 Lastwechseln nur ein geringes Wasseraufnahmevermögen zeigen.

Die Aufgabe konnte überraschenderweise gelöst werden durch ein Verfahren zur Herstellung von Polyurethan-Formteilen mit einer verdichteten Randzone und im wesentlichen geschlossenen Zellen durch Umsetzung von organischen Polyisocyanaten, Polyolen und Wasser, das dadurch gekennzeichnet ist, daß man

a) 100 Gew.-Teile eines NCO-gruppenhaltigen Prepolymeren mit einem NCO-Gehalt von 3 bis 6 Gew.-% auf Basis von organischen Diisocyanaten und in wesentlichen linearen Polyester-polyolen oder Polytetramethylenetherglykol und

2

b)  0,5 bis 1,6 Gew.-Teile Wasser in Gegenwart
c)  mindestens eines Katalysators und
d)  Hilfsmitteln sowie gegebenenfalls Zusatzstoffen

intensiv vermischt, die erhaltene Reaktionsmischung in ein Formwerkzeug mit einer Oberflächentemperatur der Forminnenwand von 50 °C bis 70 °C einbringt, das Formwerkzeug verschließt und das Reaktionsgemisch unter Verdichtung aushärten läßt.

Mischt man handelsübliche, stabilisierte NCO-gruppenhaltige Prepolymere bei 90 °C mit einer Mischung aus Emulgator, erhaltene schaumfähige Reaktionsgemisch in eine Form von Raumtemperatur, in der es aushärtet, so erhält man bei Formteilen mit geringer Dichte üblicherweise eine offenzellige Porenstruktur. Auf diese Weise hergestellte, als Federelemente verwendbare Formteile mit einem Volumen von 110 cm$^3$ und einer Dichte von 0,45 g/cm$^3$ nehmen bei Stauchung und Entlastung unter Wasser ungefähr 60 g Wasser auf.

Es war daher überraschend und nicht vorhersehbar, daß nach dem erfindungsgemäßen Verfahren unter Verwendung von Wasser als Treibmittel Formteile erhalten werden, die bei gleichem Volumen und gleicher Dichte selbst bei Stauchung und anschließender Entlastung unter Wasser, praktisch kein Wasser aufnehmen. Selbst nach einer dynamischen Belastung, z. B. nach 100 000 Lastwechseln (70 % Stauchung und Entlastung), wird keine merkliche Zunahme der Wasseraufnahme beobachtet. Eine Beeinträchtigung der Federkennlinie durch Eisbildung im Formteil trat nicht auf.

Zu den Ausgangsstoffen, die nach dem erfindungsgemäßen Verfahren zu Formteilen mit im wesentlichen geschlossenen Zellen und einer verdichteten Randzone umgesetzt werden können, ist folgendes auszuführen.

Als Polyole zur Herstellung der NCO-gruppenhaltigen Prepolymeren eignen sich Polytetramethylenether-glykole und vorzugsweise im wesentlichen lineare Polyester-polyole, insbesondere Polyesterdiole mit OH-Zahlen von 20 bis 225, vorzugsweise von 35 bis 120. Die Polyester-polyole können als Einzelkomponenten oder in Form von Mischungen zur Anwendung kommen.

Geeignete im wesentlichen lineare Polyester-polyole können beispielsweise aus Dicarbonsäuren mit 2 bis 12 Kohlenstoffatomen und zweiwertigen Alkoholen hergestellt werden. Als Dicarbonsäuren kommen beispielsweise in Betracht : aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische verwendet werden. Zur Herstellung der Polyester-polyole kann es gegebenenfalls vorteilhaft sein, anstelle der Carbonsäuren die entsprechenden Carbonsäurederivate, wie Carbonsäureester mit 1 bis 4 Kohlenstoffatmen im Alkoholrest, Carbonsäureanhydride oder Carbonsäurechloride zu verwenden. Beispiele für zweiwertige Alkohole sind Glykole mit 2 bis 16 Kohlenstoffatomen, vorzugsweise 2 bis 6 Kohlenstoffatomen, wie z. B. Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die zweiwertigen Alkohole allein oder gegebenenfalls in Mischungen untereinander verwendet werden. Geeignet sind ferner hydroxylgruppenhaltige Polyester der Kohlensäure mit den genannten Glykolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ε-Caprolactonen.

Als Polyester-polyole vorzugsweise verwendet werden Ethandiol-polyadipate, 1,4-Butandiol-polyadipate, Ethandiol-butandiol-polyadipate, 1,6-Hexandiol-neopentylglykol-polyadipate, 1,6-Hexandiol-1,4-Butandiol-polyadipate und Polycaprolactone.

Als organische Polyisocyanate werden vorzugsweise aromatische Diisocyanate verwendet. Beispielhaft genannt seien : 4,4'-Diphenyl-diisocyanat, 3,3'-Dimethyl-4,4'-Diphenyl-diisocyanat, p-Phenylen-diisocyanat, 2,4-Toluylen-diisocyanat, Gemische aus 2,4- und 2,6-Toluylen-diisocyanat, 4,4'-Diphenylmethan-diisocyanat, urethanmodifizierte, flüssige 4,4'-Diphenylmethan-diisocyanate, Gemische aus 2,4'- und 4,4'-Diphenylmethandiisocyanat und vorzugsweise 1,5-Naphthylen-diisocyanat.

Zur Herstellung der NCO-gruppenhaltigen Prepolymeren (a) werden die organischen Diisocyanate und Polyester-Polyole oder das Polytetramethylenether-glykol bei Temperaturen von 60 °C bis 160 °C, vorzugsweise 90° bis 150 °C und insbesondere 120 bis 150 °C zur Reaktion gebracht. Die Umsetzung wird gegebenenfalls in Gegenwart von üblichen Katalysatoren, beispielsweise tertiären Aminen und/oder Metallsalzen durchgeführt. Die erhaltenen NCO-gruppenhaltigen Prepolymeren besitzen NCO-Gehalte von 3 bis 6 Gew.-%, vorzugsweise 3,5 bis 4,5 Gew.-% und Viskositäten bei 90 °C von ungefähr 2 000 bis 6 000 mPas, vorzugsweise 2 500 bis 4 500 mPas. Die Produkte sind unter Feuchtigkeitsausschluß bei Raumtemperatur längere Zeit lagerstabil.

Zur Herstellung der zelligen Formteile wird als Treibmittel ausschließlich Wasser verwendet, wobei pro 100 Gew.-Teile des Prepolymeren mit einem NCO-Gehalt von 3 bis 6 Gew.-% 0,5 bis 1,6, vorzugsweise 0,6 bis 1,2 Gew.-Teile Wasser eingesetzt werden ; entsprechend einem NCO- : OH-Gruppenverhältnis von 0,8 bis 1,3 : 1.

Zur Beschleunigung der Umsetzung zwischen den NCO-gruppenhaltigen Prepolymeren und Wasser werden als Katalysatoren vorzugsweise tertiäre Amine verwendet. Im einzelnen seien beispielhaft genannt : Dimethylcyclohexylamin, Dimethylbenzylamin, N-Methyl- bzw. N-Ethylmorpholin, N,N'-Dimethyl-piperazin, Pyridin, 1,2-Dimethylimidazol, Pentamethyl-diethylentriamin, 1-Methyl-4-dimethylaminoethyl-piperazin und Diazabicyclo-(2,2,2)-octan. Die Katalysatormenge ist im wesentlichen abhängig von der Reaktivität der Komponenten und der Aktivität des Katalysators. Sie ist zweckmäßigerweise so zu wählen, daß während des Mischvorgangs und der Zeit des Befüllens der Form keine Reaktion eintritt und das erhaltene Formteil nach einer Reaktionszeit von 10 bis 30 Minuten soweit ausgehärtet ist, daß es entformt werden kann. Bewährt haben sich Katalysatormengen von 0,01 bis 2,0 Gew.-Teilen pro 100 Gew.-Teile NCO-gruppenhaltiges Prepolymer. Vorzugsweise verwendet werden 0,05 bis 1,0 Gew.-Teile pro 100 Gew.-Teile NCO-gruppenhaltiges Prepolymer.

Bewährt hat sich außerdem die Mitverwendung von Hilfsmitteln und/oder Zusatzstoffen zur Herstellung der geschlossenzelligen Formteile. Genannt seien beispielsweise oberflächenaktive Substanzen, Zellregler, Flammschutzmittel, Hydrolyseschutzmittel, Stabilisatoren gegen Licht, Hitze oder Verfärbung, Farbstoffe, Pigmente, anorganische oder organische Füllstoffe.

In Betracht kommen beispielsweise oberflächenaktive Substanzen, welche zur Unterstützung der Homogenisierung der Ausgangsstoffe dienen und die gegebenenfalls auch geeignet sind, die Zellstruktur der zellhaltigen Polyurethan-Elastomeren zu regulieren. Genannt seien beispielhaft Siloxan-Oxyalkylen-Mischpolymerisate und andere Organopolysiloxane, oxethylierte Alkylphenole, oxethylierte Fettalkohole, Polyoxyethylenester, Paraffinöle, Rizinusöl bzw. Rizinolsäureester und Türkischrotöl, die in Mengen von 0,01 bis 2,0, vorzugsweise 0,1 bis 1,0 Gew.-Teilen pro 100 Gew.-Teilen NCO-gruppenhaltiges Prepolymer angewandt werden. Vorzugsweise eingesetzt werden Siloxan-Oxyalkylen-Mischpolymerisate.

Geeignete Flammschutzmittel sind beispielsweise Trikresylphosphat, Tris-2-chlorethylphosphat und Tris-chlorporpylphosphat.

Außer den bereits genannten halogensubstituierten Phosphaten können auch anorganische Flammschutzmittel, wie roter Phosphor, Antimontrioxid, Arsenoxid, Ammoniumphosphat, Calciumsulfat und Melamin zum Flammfestmachen der Polyurethan-Elastomeren verwendet werden. Im allgemeinen hat es sich als vorteilhaft erwiesen 5 bis 50 Gew.-Teile, vorzugsweise 5 bis 25 Gew.-Teile der genannten Flammschutzmittel für jeweils 100 Gew.-Teile NCO-gruppenhaltiges Prepolymer zu verwenden.

Nähere Angaben über die obengenannten anderen Hilfs- und Zusatzstoffe sind der Fachliteratur, beispielsweise der Monographie von J. H. Saunders und K. C. Frisch « High Polymers », Band XVI, Polyurethanes, Teil 1 und 2, Verlag Interscience Publishers 1962 bzw. 1964 zu entnehmen.

Zur Herstellung der zelligen Formteile werden die NCO-gruppenhaltigen Prepolymeren auf Temperaturen von ungefähr 60 bis 120 °C, vorzugsweise 80 bis 110 °C erwärmt und bei dieser Temperatur intensiv mit einer Mischung aus Wasser, Katalysator und Hilfsmitteln sowie gegebenenfalls Zusatzstoffen gemischt. Die reaktionsfähige Mischung wird in einer Menge, die der geforderten Dichte des Formteils entspricht, in ein Formwerkzeug mit einer Oberflächentemperatur der Forminnenwand von 50 bis 70 °C, vorzugsweise 55 bis 65 °C eingebracht, die Form verschlossen und unter Verdichtung aushärten gelassen. Die erhaltenen Formteile sind nach ungefähr 10 bis 40 Minuten entformbar.

Als Formen verwendet werden vorzugsweise Metallformen, die auf eine konstante Temperatur eingestellt werden. Durch die freiwerdende Reaktionswärme tritt dadurch zu Beginn der Aushärtung eine schwache Erwärmung der Formoberfläche ein, die jedoch durch das Temperiermedium rasch ausgeglichen wird.

Die erfindungsgemäß hergestellten Formteile besitzen Gesamtdichten von 250 bis 800 g/Liter, vorzugsweise von 300 bis 500 g/Liter. Die Formteile sind im wesentlichen geschlossenzellig und weisen eine verdichtete Randzone in einer Dicke von 0,1 bis 3 mm und mit einer Dichte von ungefähr 500 bis 1 000 g/Liter auf. Das Wasseraufnahmevermögen ist sehr gering. Die Formteile zeigen auch nach mehr als 100 000 Lastwechseln keine Zellöffnung in der Randzone. Die Formteile werden vorzugsweise als Federelemente, beispielsweise in Automabilen verwendet, wobei sie zusätzlich eine Schutzfunktion für die Metallteile ausüben.

Die in den Beispielen genannten Teile sind Gewichtsteile.

## Beispiel 1

a) Herstellung des NCO-gruppenhaltigen Prepolymeren

1 000 Teile eines Polyethylenglykoladipats mit einer OH-Zahl von 56 wurden in einem Rührkolben, ausgestattet mit Rührer, Thermometer und Vakuumanschluß 2 Stunden lang bei 120 °C und 50 mbar entwässert. Anschließend fügte man zu dem Polyesterpolyol unter intensivem Rühren bei 130 °C 240 Teile 1,5-Naphthylen-diisocyanat und führte die Reaktion bei 130 °C in 20 Minuten zu Ende. Danach ließ man im Verlauf von einer Stunde auf 90 °C abkühlen. Man erhielt 1 240 Teile eines NCO-gruppenhaltigen Prepolymeren mit einem NCO-Gehalt von 4,0 % und einer Viskosität bei 90 °C von 3 800 mPas.

b) Zur Herstellung des Formteils wurden

160 g des unter a) beschriebenen Prepolymeren mit einer Temperatur von 90 °C mit 3,45 g einer Mischung aus

1,4 Teilen Wasser

0,05 Teilen Triethylendiamin
1,4 Teilen Na-Salz des Türkischrotöls und
0,6 Teilen Siliconstabilisator 1312 (von Fa. Dow Corning) mit einer Temperatur von 50 °C intensiv gemischt. Nach dem Homogenisieren wurde die reaktionsfähige Mischung in eine Aluminiumform mit den Innenmaßen 21,2 × 5,5 × 3,0 cm, die eine Formoberflächentemperatur im Forminnern von 60 °C aufwies, gegossen und die Form geschlossen. Das Formteil, das nach 30 Minuten entformt werden konnte, besaß die folgenden mechanischen Kenndaten.

| | | |
|---|---|---:|
| Gesamtdichte | [g/Liter] | 454 |
| verdichtete Randzone | | |
| Dicke | [mm] | 2 |
| Dichte | [g/Liter] | 700 |
| Dichte des Kerns | [g/Liter] | 330 |
| Wasseraufnahme nach 100 000 Lastwechseln | | |
| 70 % Stauchung/Entlastung mit 2 Hz | [g] | 5 |

Beispiel 2

a) Herstellung des NCO-gruppenhaltigen Prepolymeren

1 000 Teile eines Polyethylenglykol/butandiol-1,4 (1 : 1 Mol)-adipats mit einer OH-Zahl von 56 wurden in einem Rührkolben, ausgestattet mit Rührer, Thermometer und Vakuuman schuß 2 Stunden lang bei 120 °C und 50 mbar entwässert. Anschließend fügte man zu dem Polyesterpolyol unter intensivem Rühren bei 126 °C 250 Teile 1,5-Naphthylen-diisocyanat und führte die Reaktion bei 128 °C in 30 Minuten zu Ende. Danach ließ man im Verlauf von einer Stunde auf 86 °C Abkühlen. Man erhielt 1 250 Teile eines NCO-gruppenhaltigen Prepolymeren mit einem NCO-Gehalt von 4,25 % und einer Viskosität bei 86 °C von 3 100 mPas.

b) Zur Herstellung des Formteils wurden

160 g des unter a) beschriebenen Prepolymeren mit einer Temperatur von 85 °C mit 4,05 g einer Mischung aus
1,5 Teilen Wasser
0,05 Teilen Pentamethyl-diethylentriamin
1,5 Teilen ®Lutensol ON 50 D (BASF Aktiengesellschaft) und
1,0 Teilen Siliconstabilisator B 8404 (von Fa. Goldschmidt) mit einer Temperatur von 55 °C intensiv gemischt. Nach dem Homogenisieren wurde die reaktionsfähige Mischung in eine Aluminiumform mitden Innenmaßen 21 × 5,5 × 3,0 cm, die eine Formoberflächentemperatur im Forminnern von 55 °C aufwies, gegossen und die Form geschlossen. Das Formteil, das nach 25 Minuten entformt werden konnte, besaß die folgenden mechanischen Kenndaten.

| | | |
|---|---|---:|
| Gesamtdichte | [g/Liter] | 454 |
| verdichtete Randzone | | |
| Dicke | [mm] | 2 |
| Dichte | [g/Liter] | 600 |
| Dichte des Kerns | [g/Liter] | 360 |
| Wasseraufnahme nach 100 000 Lastwechseln | | |
| 60 % Stauchung/Entlastung mit 2 Hz | [g] | 8 |

Beispiel 3

a) Herstellung des NCO-gruppenhaltigen Prepolymeren

1 000 Teile eines Polyhexandiol-1,6/butandiol-1,4 (1 : 1 Mol)-adipats mit einer OH-Zahl von 56 wurden in einem Rührkolben, ausgestattet mit Rührer, Thermometer und Vakuumanschluß 2 Stunden lang bei 120 °C und 50 mbar entwässert. Anschließend fügte man zu dem Polyesterpolyol unter intensivem Rühren bei 133 °C 240 Teile 1,5-Naphthylen-diisocyanat und führte die Reaktion bei 133 °C in 10 Minuten zu Ende. Danach ließ man im Verlauf von einer Stunde auf 100 °C abkühlen. Man erhielt 1 240 Teile eines NCO-gruppenhaltigen Prepolymeren mit einem NCO-Gehalt von 3,9 und einer Viskosität bei 100 °C von 3 200 mPas.

b) Zur Herstellung des Formteils wurden

160 g des unter a) beschriebenen Prepolymeren mit einer Temperatur von 100 °C mit 3,45 g einer Mischung aus

5

**0 062 835**

1,4 Teilen Wasser
0,03 Teilen 1-Methyl-4-dimethylaminoethyl-piperazin
1,4 Teilen Na-Salze des Türkischrotöls (Emulgator) und
1,4 Teilen Siliconstabilisator L 532 von Fa. BP mit einer Temperatur von 50 °C intensiv gemischt. Nach dem Homogenisieren wurde die reaktionsfähige Mischung in eine Aluminiumform mit den Innenmaßen 21,2 × 5,5 × 3,0 cm, die eine Formoberflächentemperatur im Forminnern von 52 °C aufwies, gegossen und die Form geschlossen. Das Formteil, das nach 20 Minuten entformt werden konnte, besaß die folgenden mechanischen Kenndaten.

| | | |
|---|---|---:|
| Gesamtdichte | [g/Liter] | 453 |
| Verdichtete Randzone | | |
| Dicke | [mm] | 3 |
| Dichte | [g/Liter] | 700 |
| Dichte des Kerns | [g/Liter] | 300 |
| Wasseraufnahme nach 100 000 Lastwechseln | | |
| 60 % Stauchung/Entlastung mit 2 Hz [g] | | |

Beispiel 4

a) Herstellung des NCO-gruppenhaltigen Prepolymeren

1 000 Teile eines Polytetrahydrofurans mit einer OH-Zahl von 112 wurden in einem Rührkolben, ausgestattet mit Rührer, Thermometer und Vakuumschluß 2 Stunden lang bei 120 °C und 50 mbar entwässert. Anschließend fügte man zu dem Polyesterpolyol unter intensivem Rühren bei 125 °C 360 Teile 1,5-Naphthylen-diisocyanat und führte die Reaktion bei 130 °C in 20 Minuten zu Ende. Danach ließ man im Verlauf von einer Stunde auf 100 °C abkühlen. Man erhielt 1 300 Teile eines NCO-gruppenhaltigen Prepolymeren mit einem NCO-Gehalt von 4,1 und einer Viskosität bei 90 °C von 2 500 mPas.

b) Zur Herstellung des Formteils wurden

160 g des unter a) beschriebenen Prepolymeren mit einer Temperatur von 90 °C mit 3,45 g einer Mischung aus
1,4 Teilen Wasser
0,05 Teilen Pentamethyl-diethylentriamin
1,4 Teilen ®Lutensol ON 50 D (BASF Aktiengesellschaft) mit einer Temperatur von 55 °C intensiv gemischt. Nach dem Homogenisieren wurde die reaktionsfähige Mischung in eine Aluminiumform mit den Innenmaßen 21,2 × 5,5 × 3,0 cm, die eine Formoberflächentemperatur im Forminnern von 56 °C aufwies, gegossen und die Form geschlossen. Das Formteil, das nach 30 Minuten entformt werden konnte, besaß die folgenden mechanischen Kenndaten.

| | | |
|---|---|---:|
| Gesamtdichte | [g/Liter] | 454 |
| verdichtete Randzone | | |
| Dicke | [mm] | 3 |
| Dichte | [g/Liter] | 700 |
| Dichte des Kerns | [g/Liter] | 300 |
| Wasseraufnahme nach 100 000 Lastwechseln | | |
| 60 % Stauchung/Entlastung mit 2 Hz [g] | | 3 |

**Patentansprüche**

1. Verfahren zur Herstellung von Polyurethan-Formteilen mit einer verdichteten Randzone und im wesentlichen geschlossenen Zellen durch Umsetzung von organischen Polyisocyanaten, Polyolen und Wasser, dadurch gekennzeichnet, daß man
a) 100 Gew.-Teile eines NCO-gruppenhaltigen Prepolymeren mit einem NCO-Gehalt von 3 bis 6 Gew.-% auf Basis von organischen Diisocyanaten und im wesentlichen linearen Polyester-polyolen oder Polytetramethylenether-glykol und
b) 0,5 bis 1,6 Gew.-Teile Wasser in Gegenwart
c) mindestens eines Katalysators und
d) Hilfsmitteln sowie gegebenenfalls Zusatzstoffen intensiv vermischt, die erhaltene Reaktionsmischung in ein Formwerkzeug mit einer Oberflächentemperatur der Forminnenwand von 50 bis 70 °C einbringt und unter Verdichtung in dem geschlossenen Formwerkzeug aushärten läßt.
2. Verfahren nach Anspruch 1, dadurch gekennzeichnet, daß zur Herstellung der Prepolymeren Polyester-diole mit OH-Zahlen von 20 bis 225 verwendet werden.

3. Verfahren nach Anspruch 1, dadurch gekennzeichnet, daß als organisches Diisocyanat 1,5-Naphthylen-diisocyanat verwendet wird.

4. Verfahren nach Anspruch 1, dadurch gekennzeichnet, daß als Katalysatoren tertiäre Amine verwendet werden.

5. Verfahren nach Anspruch 4, dadurch gekennzeichnet, daß die tertiären Amine in einer Menge von 0,01 bis 2 Gew.-Teilen pro 100 Gew.-Teilen des NCO-gruppenhaltigen Prepolymer verwendet werden.

6. Verfahren nach Anspruch 1, dadurch gekennzeichnet, daß die Polyurethan-Formteile Raumgewichte von 250 bis 800 g/Liter besitzen.

7. Verfahren nach Anspruch 1, dadurch gekennzeichnet, daß das Polyurethan-Formteil ein Federelement ist.

### Claims

1. A process for the production of polyurethane moldings which have a densified surface zone and substantially closed cells by reacting organic polyisocyanates, polyols and water, wherein

a) 100 parts by weight of an NCO-containing prepolymer, having an NCO content of from 3 to 6 % by weight and based on organic diisocyanates and substantially linear polyester-polyols or polytetramethylene ether glycol, and

b) 0.5 to 1.6 parts by weight of water are mixed thoroughly in the presence of

c) one or more catalysts, and

d) auxiliaries, with or without additives, the resulting reaction mixture is introduced into a mold whose inner wall has a surface temperature of from 50 to 70 °C, the mold is closed and the mixture is allowed to harden whilst undergoing densification.

2. A process as claimed in claim 1, wherein a polyester-diol having an OH number from 20 to 225 is used to prepare the prepolymer.

3. A process as claimed in claim 1, wherein the organic diisocyanate used is 1,5-naphthylene diisocyanate.

4. A process as claimed in claim 1, wherein the catalyst used is a tertiary amine.

5. A process as claimed in claim 4, wherein the tertiary amine is used in an amount of from 0.01 to 2 parts by weight per 100 parts by weight of the NCO-containing prepolymer.

6. A process as claimed in claim 1, wherein the polyurethane molding has a density of from 250 to 800 g/liter.

7. A process as claimed in claim 1, wherein the polyurethane molding is a spring element.

### Revendications

1. Procédé de préparation de pièces moulées en polyuréthane à zone marginale comprimée et à cellules essentiellement fermées, par réaction de polyisocyanates organiques, polyols et eau, caractérisé par le fait que l'on mélange intensément

a) 100 parties en poids d'un prépolymère à groupes NCO, d'une teneur en NCO de 3 à 6 % en poids, à base de diisocyanates organiques et polyester-polyols essentiellement linéaires ou polytétraméthylène-éther-glycol et

b) 0,5 à 1,6 parties en poids d'eau, en présence de

c) au moins un catalyseur et

d) des auxiliaires ainsi qu'éventuellement des additifs, on introduit le mélange de réaction obtenu dans un outil de formage, à une température superficielle de la paroi intérieure du moule de 50 à 70 °C et on fait durcir, avec compression, dans l'outil de formage fermé.

2. Procédé selon la revendication 1, caractérisé par le fait que, pour préparer le prépolymère, on utilise des polyestersdiols d'indice OH de 20 à 225.

3. Procédé selon la revendication 1, caractérisé par le fait que, comme diisocyanate organique, on utilise du 1,5-naphtylène-diisocyanate.

4. Procédé selon la revendication 1, caractérisé par le fait que, comme catalyseurs, on utilise des amines tertiaires.

5. Procédé selon la revendication 4, caractérisé par le fait que les amines tertiaires sont utilisées en quantité de 0,01 à 2 parties en poids par 100 parties en poids du prépolymère à groupes NCO.

6. Procédé selon la revendication 1, caractérisé par le fait que les pièces moulées de polyuréthane possèdent des densités de 250 à 800 g/litre.

7. Procédé selon la revendication 1, caractérisé par le fait que la pièce moulée en polyuréthane est un élément élastique.